Europäisches Patentamt

**European Patent Office**                 (11) Publication number:  **0 150 950**

Office européen des brevets                                    **B1**

⑫                          EUROPEAN  PATENT  SPECIFICATION

(45) Date of publication of patent specification: **18.10.89**    (51) Int. Cl.⁴: **B 32 B 7/02, B 32 B 27/08**

(21) Application number: **85300256.6**

(22) Date of filing: **15.01.85**

(54) **Improved packaging material.**

(30) Priority: **20.01.84 CA 445702**

(43) Date of publication of application:
**07.08.85 Bulletin 85/32**

(45) Publication of the grant of the patent:
**18.10.89 Bulletin 89/42**

(84) Designated Contracting States:
**CH DE FR GB LI NL SE**

(56) References cited:
**EP-A-0 053 925**
**GB-A-1 384 791**
**US-A-4 488 918**

(73) Proprietor: **OY WIIK & HÖGLUND AB**
**PB 21**
**SF-651 01 Vasa 10 (FI)**

(72) Inventor: **Jofs, Jarl-Erik**
**Gustavsrovaegen 8**
**F-65230 Vasa 23 (FI)**

(74) Representative: **Thomson, Paul Anthony et al**
**Potts, Kerr & Co. 15, Hamilton Square**
**Birkenhead Merseyside L41 6BR (GB)**

EP 0 150 950 B1

Courier Press, Leamington Spa, England.

## Description

This invention relates to improvements in packaging material.

In particular, it relates to improvements in polymers used in packaging frozen foods.

The requirements of modern marketing of food products which are often transported over large distances or stored for long period of time have resulted in the development of various packaging methods and techniques consistent with the preservation and storage of food products and the like by freezing.

Notwithstanding the advantages of freezing these products, problems still arise in maintaining the quality of the product over a period of time and additional problems are presented by the packaging and handling aspects.

Traditionally, frozen products have been wrapped in products such as paper, wax paper, cardboard cartons and the like. More recently modern technology has provided polymers or "plastic" wrapping material which has advantages because it can be sealed, is relatively air tight and is comparatively indestructible by water or moisture.

Even with modern improvements to traditional wrapping material certain disadvantages remain a problem. Two of the major problems with the storage and handling of frozen foods remain: (a) the deterioration over a period of time by the process of oxidation of the frozen food products, especially those with a high fat content such as means, powdered whole milk etc., and (b) the difficulty in handling and stock piling frozen products which are hard and slippery because of the contact between the wrapping material and ice or water from the surface of the packaging.

Traditional cardboard packaging is expensive and deteriorates in such a way that it cannot be easily reused.

These materials are also not sufficiently airtight. Even many "plastics" are polymer wrapping materials, while they appear to be waterproof and airtight are in fact permeable to gases such as oxygen and in context of long term storage do not adequately protect the contents against deterioration by oxidation, and inversely, when foods such as poultry are "Gas Flush" packaged, do not prevent escape of $CO_2$ or nitrogen.

It is therefore the purpose of this invention to provide a new and improved packaging material, of the polymer type, which will at the same time provide superior preservative and protection properties to the packaged product such as frozen or unfrozen foods, and will additionally render the package more safe and easier to handle.

The present invention represents a combination of materials and technology not hitherto employed in this way so as to provide a packaging material which is easy to use, effective in protecting food products, and capable of handling and stock piling without the slippery properties previously encountered.

According to the present invention there is provided a packaging material of laminated construction comprising a first layer of gas impervious polymer material and a second layer of anti-slip polymer material bonded to one side of said first layer by a mutually compatible adhesive.

Preferably, said second layer is a polyolefin film having an anti-slip texture on the side not bonded to said first layer, which texture is comprised of a random pattern of high hard peaks and ridges of polyolefin material.

The invention preferably comprises a packaging material composed of laminates of polymers comprising a layer of oxygen, carbon dioxide or other gas impervious polyamide such as nylon and a layer of a high friction polyolefin based film, the two layers being bonded by a suitable adhesive capable of bonding these two materials which are not otherwise generally compatible. In order to make the packaging material capable of sealing on itself, it may be necessary to bond the gas barrier layer on both sides by a polyolefin. It may also be desirable to manufacture the material in a heat shrinkable form.

The manufacture of this product may be carried out by coextrusion or by lamination.

The nature of this invention may be better understood by the following description of specific embodiments and technology applicable to the manufacture and use of this invention.

Although many polymer films presently used for wrapping and packaging (where the time of preservation in the quality are not critical) are gas permeable (leaving products subject to deterioration known as "fat oxidation" or "yellowing"). There are products developed which are known and have the quality of being relatively impervious to gases such as oxygen and carbon dioxide. These films are commonly polyamides, polyesters, polyvinylidene chloride, polyvinyl alcohol, such as nylons, or copolymers thereof. These polymers are known to those skilled in the art for their gas barrier properties. However, polyamides and polyvinyl alcohols have additional properties which are disadvantageous. These include the fact that they tend to absorb moisture and the fact that the gas barrier films have a very low coefficient of friction. Therefore, products wrapped in such polymers are subject to moisture and are very slippery especially in contact with ice, frost or water commonly associated with frozen products.

The present invention therefore conceives of the advantage of laminating such a gas barrier film with another film of a polyolefin class such as polyethylene which is cheap, light weight, resistant to chemicals and very pliable. It is therefore suitable for containers in packaging in many ways and can be produced in different densities. It is a suitable water vapour barrier and commonly used in the packaging industry because of its properties.

The disadvantage in the packaging industry is that polyolefins such as polyethylene are generally not good gas barriers and are too permeable to oxygen and carbon dioxide to be adequate preservers of meats and other food products containing fats against oxidation. The additional advantage of polyethylene in the context of this invention is that it is relatively easy to seal one piece against another to form a tight closure to the packaging.

A further and more specific advantage is that polyethylene can be manufactured with an extremely rough textured surface by known technology so as to render it highly slip resistant even in the presence of snow and ice and water.

This property is created by a manufacturing technique which is described in U.S. Patent No. 4,045,270 and corresponding Canadian Patent. Briefly, this involves coextrusion of two layers of polyethylene in a tube shape, the outer layer being a less plastic or pliable form of polyethylene so that when the film is formed by expansion by internal air pressure in the tube, the inner layer will stretch while the outer layer will break up into a pattern of high hard sharp peaks and ridges on the outer surface when the film cools. Additional improvements in this technology have been developed and are disclosed in Canadian Patent No. 1,186,863 and pending United States Patent No. 4,488,918.

The present invention therefore achieves the desired advantages of long term protection against deterioration combined with the effective sealing and ease of handling and stock piling in a single packaging material by combining as a laminated product a layer of gas barrier film with a layer of polyolefin such as polyethylene having an antifriction surface such as that described above. It may be necessary or desirable to provide a polyethylene film on both sides of the gas barrier for effectiveness in sealing the package.

One of the problems which must be overcome in order to make effective use of this concept is the fact that the polyolefins are generally not compatible with the gas barrier resins in the sense that they do not readily bond or seal one to another. This is overcome by the incorporation of a suitable mutually compatible bonding material or tie layer.

Films of the type described above can be manufactured by coextrusion or by lamination. In the latter case the films of gas barrier resins and polyolefin respectively would be manufactured in a conventional way and bonded by means of a suitable mutually compatible adhesive in accordance with existing techniques known to those skilled in the art to form a laminated film in which at least one layer is a gas barrier and the other is a rough textured slip resistant layer of polyethylene or the like.

There are products known in the present state of the art capable of achieving this adhesion or bonding known to those skilled in the art. These include some polyurethane based adhesive. Details of the technology for bonding such films are found in existing disclosure such as German Patent Application No. 3 114 771 and details of water soluble adhesive in British Patent Application No. 8,125,097 published as EP—A— 0 072 626.

Likewise in the coextrusion method existing technology may be used whereby the gas barrier film and one or more polyolefin films may be extruded through adjacent dies of an extrusion machine along with an intermediate layer between them of a suitable adhesive material so that the layers of the laminate are manufactured together and the dies arranged so that the layers come into bonding contact as they are extruded. These coextrusion techniques are disclosed in German Patent Application No. 3 114 171 and British Patent 1 385 196 (29532/71, 1986/72).

Although these disclosures and other known technology relate to coextrusion of packaging materials, the present invention provides, in a single packaging material, the advantage of protection against oxygen while providing a finished package which has a rough texture capable of gripping adjacent packages or storage containers so as to minimize slipping and collapse of stock piles.

It will be realized that such packaging may also be used to form a vacuum sealed package in which all air has been removed so as to form a rigid block even with unfrozen, powdered granulated products such as milk powder, ground coffee, cereals, etc. The rigidity of this type of packaging makes it additionally easy to stack, especially when combined with the high friction characteristics of the textured outer surface, without using an expensive cardboard outer carton.

It will be realized that additional applications of this product and modifications in the structure or means of manufacture may be incorporated without departing from the inventive concept herein.

**Claims**

1. A packaging material of laminated construction comprising a first layer of gas impervious polymer material and a second layer of anti-slip polymer material bonded to one side of said first layer by a mutually compatible adhesive.

2. A packaging material as claimed in claim 1, in which said second layer is a polyolefin film having an anti-slip texture on the side not bonded to said first layer, which texture is comprised of a random pattern of high hard peaks and ridges of polyolefin material.

3. A packaging material as claimed in claim 1 or 2, in which the packaging material has a second layer of polyolefin on the other side of said impervious first layer.

4. A packaging material as claimed in claim 1, 2 or 3, in which said gas impervious polymer material comprises a polyamide, a polyester, a polyvinylidene chloride, a polyvinyl alcohol, or co-polymers thereof.

5. A packaging material as claimed in any preceding claim, in which said adhesive is a polyurethane based adhesive.

6. A method of manufacturing a film as claimed in any preceding claim in which said layers of film and adhesive are coextruded and expanded.

**Patentansprüche**

1. Verpackungsmaterial in Schichtaufbau, enthaltend eine erste gasdichte Schicht aus Polymermaterial und eine zweite Schicht aus Gleitschutz-Polymermaterial, welche mittels eines gegenseitig kompatiblen Bindemittels mit einer Seite der ersten Schicht verbunden ist.

2. Verpackungsmaterial nach Anspruch 1, bei welchem die erwähnte zweite Schicht ein Polyolefinfilm mit einer Gleitschutzstruktur auf der nicht mit der ersten Schicht verbundenen Seite ist, welche Struktur aus einem zufällig verteilten Muster von hohen, harten Spitzen und Rippen aus Polyolefin-Material besteht.

3. Verpackungsmaterial nach Anspruch 1 oder 2, wobei das Verpackungsmaterial eine zweite Polyolefinschicht auf der anderen Seite der ersten, undurchlässigen Schicht aufweist.

4. Verpackungsmaterial nach Anspruch 1, 2 oder 3, bei welchem die erwähnte gasundurchlässige Schicht ein Polyamid, ein Polyester, ein Polyvinylidenchlorid, einen Polyvinylalkohol oder Copolymere derselben aufweist.

5. Verpackungsmaterial nach irgendeinem der vorstehenden Ansprüche, worin das Bindemittel ein Bindemittel auf Polyurethanbasis ist.

6. Verfahren zur Herstellung eines Films gemäss irgendeinem der vorstehenden Ansprüche, wobei die erwähnten Film- und Bindemittelschichten koextrudiert und expandiert werden.

**Revendications**

1. Matériau d'emballage de construction stratifiée, comprenant une première couche de matériau polymère étanche au gas et une seconde couche d'un matériau polymère antiglissant lié à un côté de ladite première couche par un adhésif mutuellement compe un adhésif mutuellement compatible.

2. Matériau d'emballage selon la revendication 1, dans lequel ladite seconde couche est un film polyoléfine ayant une texture antiglissante sur le côté non lié à ladite première couche, cette texture consistant en une distribution au hasard de pointes et de stries en matériau polyoléfine.

3. Matériau d'emballage selon la revendication 1 ou 2, consistant en une seconde couche de polyoléfine sur l'autre côté de ladite première couche étanche.

4. Matériau d'emballage selon l'une des revendications 1, 2 ou 3, dans lequel ledit matériau polymère étanche au gas comprend un polyamide, polyester, chlorure de polyvinylidène, alcool polyvinylique ou des copolymères de ceux-ci.

5. Matériau d'emballage selon l'une quelconque des revendications précédentes, dans lequel ledit adhésif est à base de polyuréthane.

6. Procédé de fabrication d'un film selon l'une quelconque des revendications précédentes, dans lequel lesdites couches de film et d'adhésif sont produites par co-extrusion et expansées.